# FASCICULE DE BREVET EUROPEEN

(11) **EP 0 468 870 B1**
(45) Date de publication et mention de la délivrance du brevet: **15.03.1995**
(21) Numéro de dépôt: 91402030.0
(22) Date de dépôt: 22.07.1991
(51) Int. Cl.: G21C 3/322, G21C 3/332

(54) **Assemblage combustible de réacteur nucléaire avec grille additionnelle**
Kernreaktor-Brennstabbündel mit zusätzlichem Abstandshalter
Nuclear reactor fuel assembly with additional grid

(30) Priorité: 24.07.1990 FR 9009447
(43) Date de publication de la demande: 29.01.1992
(73) Titulaire: FRAMATOME, 92400 Courbevoie (FR); COMPAGNIE GENERALE DES MATIERES NUCLEAIRES (COGEMA), 78141 Vélizy-Villacoublay (FR)
(72) Inventeur: Canat, Jean-Noel, F-69005 Lyon (FR); Mortgat, Régis, F-69270 Couzon au Mont d'Or (FR)
(74) Mandataire: Fort, Jacques

(56) Documents cités:
- EP-A- 0 148 452
- EP-A- 0 261 544
- EP-A- 0 262 997
- EP-A- 0 304 724
- FR-A- 2 457 544

## Description

La présente invention a pour objet un assemblage combustible nucléaire comportant une grille additionnelle de mélange, ayant notamment pour fonction d'améliorer le mélange des filets de réfrigérant en circulation ascendante dans l'assemblage et d'homogénéiser les températures et étant destinée à être intercalée entre des grilles constituant des éléments de la structure de l'assemblage. Un tel assemblage combustible est connu du EP-A- 0 148 452.

L'invention trouve une application particulièrement importante dans les assemblages combustibles pour réacteur à eau sous pression comprenant une structure de support ayant deux embouts reliés par des tubes guides et ayant des grilles de structure réparties le long de l'assemblage, chaque grille de structure ayant au moins deux jeux de plaquettes entrecroisés et une ceinture extérieure délimitant des cellules traversées les unes par des tubes guides et les autres par des crayons, les plaquettes étant munies de moyens limitant le débattement des crayons à partir des noeuds d'un réseau régulier et étant fixées à certains au moins des tubes guides, certaines grilles au moins (celles placées en aval dans le sens de l'écoulement) étant munies d'ailettes de mélange des filets de réfrigérant.

Une au moins des grilles de structure assure de plus le supportage des crayons. Pour cela, elle est habituellement munie de ressorts, découpés dans les plaquettes ou rapportés sur les plaquettes, destinés à plaquer les crayons sur des bossettes embouties dans les plaquettes formant d'autres faces de chaque cellule.

Souvent le supportage est réalisé par la grille de structure haute ou basse. Les autres grilles de structure ne participent pas au supportage, c'est-à-dire ne participent pratiquement pas au maintien vertical des crayons. Mais souvent certaines d'entre elles au moins ont une fonction de maintien en plan ou de centrage précis des crayons. Pour cela chaque face de chaque cellule de la grille de structure qui est traversée par un crayon porte une bossette d'appui du crayon, la saillie des bossettes étant telle que le crayon peut glisser à frottement doux dans la cellule.

Pour augmenter les échanges thermiques entre les crayons et le réfrigérant et homogénéiser les températures à chaque niveau, on a déjà proposé d'insérer une grille additionnelle de mélange dans un ou plusieurs des intervalles compris entre deux grilles de structure.

En particulier, on a proposé de placer, à la partie haute de l'assemblage (lorsque la circulation du réfrigérant est ascendante dans le coeur, ce qui est le cas général) des grilles de mélange allégées, munies d'ailettes, ayant une ceinture, entre les grilles de structure classiques.

Mais, du fait que deux grilles additionnelles de deux assemblages combustibles adjacents peuvent se heurter ou frotter l'une sur l'autre, la ceinture doit être résistante. Pour cela elle est constituée en plaquettes externes plus épaisses et/ou plus hautes que les plaquettes internes, ce qui augmente l'absorption neutronique et les pertes de charge.

On a tenté de résoudre ce problème (EP-A-0 261 544) en utilisant des grilles additionnelles démunies de ceinture, constituées de plaquettes entièrement plates, fixées aux tubes guides et délimitant des cellules de dimensions telles que les crayons les traversent avec un jeu.

De telles grilles additionnelles présentent des inconvénients. Elles ne limitent pratiquement pas le débattement des crayons qui, surtout dans les réacteurs dont on augmente la puissance thermique par augmentation du débit et donc de la vitesse de circulation du réfrigérant, risquent d'être le siège de vibrations en flexion. De telles vibrations les conduisent à marteler les ailettes de brassage du réfrigérant équipant la grille additionnelle.

La présente invention vise notamment à fournir un assemblage combustible comportant une grille additionnelle répondant mieux que celles antérieurement connues aux exigences de la pratique, notamment en ce qu'elle améliore les échanges thermiques sans pour autant présenter les inconvénients des grilles additionnelles antérieures à ceinture ou sans ceinture.

Dans ce but l'invention propose un assemblage combustible selon la revendication 1.

La grille ou les grilles additionnelles d'un assemblage seront généralement constituées en un alliage à base de zirconium, donc à faible absorption neutronique. Cet alliage peut être celui connu sous le nom de "zircaloy 4", détendu thermiquement. L'alliage peut aussi être un alliage trempé à base de zirconium, par exemple à 1 % de niobium, 1 % d'étain et 0,5 % de fer en poids.

Les grilles additionnelles de mélange, n'ayant qu'une fonction thermohydraulique, peuvent avoir une longueur axiale beaucoup plus faible que les grilles de structure. La longueur hors ailettes peut par exemple être de 10 mm au lieu de 43 mm.

On voit que la grille additionnelle selon l'invention a une structure légère, n'impose qu'une faible perte de charge à l'écoulement et cependant, lorsqu'elle est munie d'ailettes ayant un dimensionnement approprié, améliore l'homogénéité thermique de l'écoulement ; du fait des moyens de maintien des crayons qu'elle comporte, elle évite les risques de martelage des ailettes en cas de vibration et elle réduit le fléchissement possible des crayons.

L'assemblage combustible selon l'invention a une structure qui comporte des embouts d'extrémité, des tubes guides de liaison des embouts et des grilles de structure ayant une ceinture (dont une au moins assure le supportage des crayons), et au moins une grille additionnelle du type défini plus haut, placée entre deux grilles de structure dans la partie aval de l'assemblage, les crayons sont supportés par une des deux grilles de structure terminales et cette grille est en acier martensitique. La grille de supportage est fixée à certains au moins des tubes guides ou à un des embouts et elle est munie de moyens élastiques de supportage et de centrage des crayons qui peuvent être classiques. L'autre grille terminale peut être également munie de moyens élastiques de supportage, mais n'être pas fixée aux tubes guides de sorte qu'elle autorise les dilatations différentielles qui surviennent sous irradiation entre les crayons d'une part, et les tubes guides d'autre part. Les autres grilles de structure sont fixées à certains au moins des tubes guides et portent soit des moyens de centrage des crayons, soit des moyens qui limitent simplement leur débattement en flexion.

L'invention sera mieux comprise à la lecture de la description qui suit d'un mode particulier de réalisation de l'invention, donné à titre d'exemple non limitatif. La description se réfère aux dessins qui l'accompagnent, dans lesquels :
- la figure 1 est une vue schématique en élévation montrant une répartition de grilles dans un assemblage combustible pour réacteur à eau sous pression, mettant en oeuvre l'invention ;
- la figure 2 est une vue schématique en plan d'un fragment de grille additionnelle de mélange suivant un mode particulier de réalisation de l'invention ;
- la figure 3 est une vue de côté de la grille de la figure 2, dans la direction de la ligne III-III ;
- la figure 4 est une vue en coupe, à grande échelle, suivant la ligne IV-IV de la figure 2 ;
- la figure 5, similaire à la figure 2, montre une grille de structure utilisable dans l'assemblage de la figure 1 et limitant les débattements des crayons ;
- la figure 6 est une vue de côté de la grille de la figure 5, dans la direction de la ligne VI-VI ;
- la figure 7 est une vue en coupe, à grande échelle, suivant la ligne VII-VII de la figure 5 ;
- la figure 8 est une vue de détail en perspective, à grande échelle, montrant les parois d'une des cellules de la grille de la figure 5 ;
- la figure 9, similaire à la figure 2, montre une constitution possible de grille de supportage utilisable dans l'assemblage de la figure 1 ;
- la figure 10 est une vue de côté de la grille de la figure 9, dans la direction de la ligne X-X ;
- la figure 11 est une vue de détail à grande échelle, en coupe suivant la ligne XI-XI de la figure 9 ;
- la figure 12 est une vue en coupe à grande échelle suivant l'axe d'un tube guide, montrant une constitution possible de moyens de liaison entre la partie inférieure du tube guide, la grille de supportage inférieure et l'emboutinférieur ;
- la figure 13, similaire à la figure 7, montre une variante de réalisation des grilles de structure ;
- la figure 14, similaire à la figure 7, montre une constitution possible de grille de structure en deux moitiés solidarisées l'une de l'autre;
- la figure 15 montre un fragment de grille selon la variante de réalisation de la figure 14, avant mise en place de la ceinture ;
- les figures 16 et 17 montrent un fragment de grille, constituant une variante de celle des figures 5 à 8 la figure 17 étant une vue en coupe de la figure 16 ;
- les figures 18 et 19, similaires aux figures 16 et 17, montrent une cellule de rive.

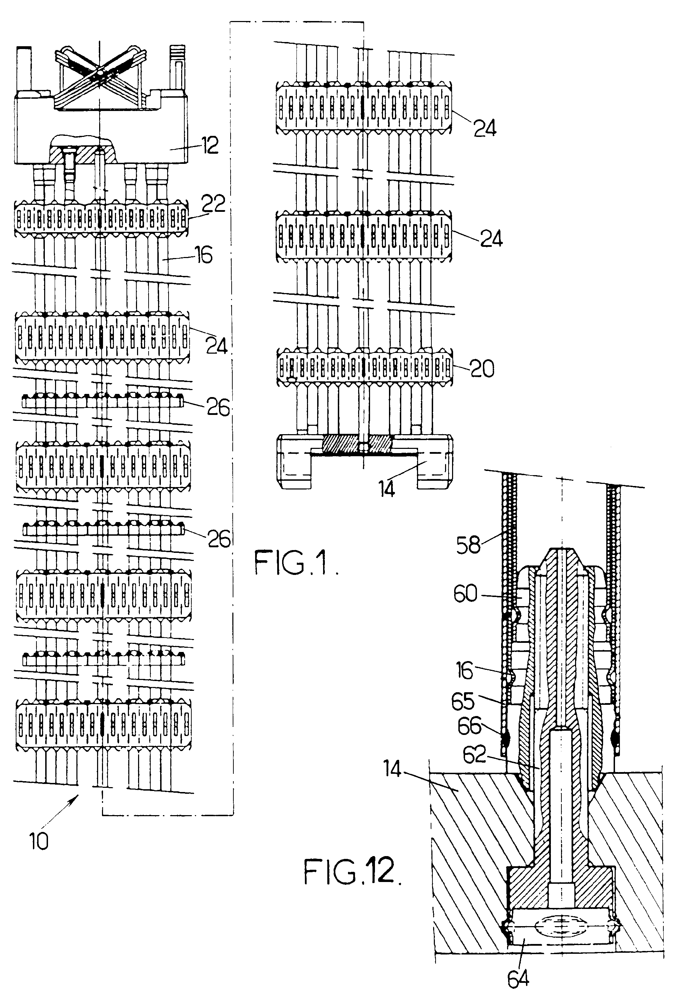

Un assemblage combustible 10 suivant l'invention est montré en figure 1. Cet assemblage 10 comporte une structure ayant deux embouts ou pièces d'extrémité 12 et 14 reliés par des tubes guides 16 destinés à recevoir les crayons d'une grappe de commande non représentée et ayant des grilles de structure, réparties à intervalles le long des tubes guides et fixées à certains au moins de ces tubes guides 16, à l'exception d'une seule des grilles de structure terminales dans le cas représenté à titre d'exemple. Les grilles délimitent des cellules de passage de crayons non représentés ou de tubes guides.

Par la suite, on décrira l'invention essentiellement dans son application à un assemblage combustible dont les grilles de structure délimitent des cellules carrées et dans lequel l'embout supérieur 12 est fixé à l'embout inférieur 14 par les tubes guides de l'assemblage.

Dans l'assemblage représenté à titre d'exemple, les grilles de structure sont de deux types différents.

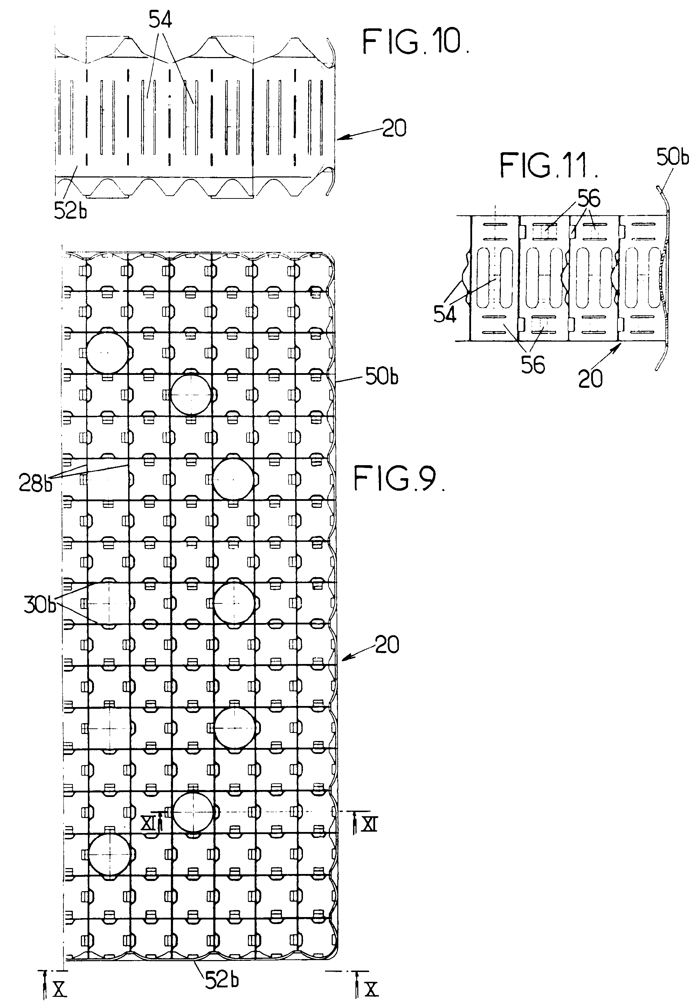

La grille de structure inférieure 20 (figures 9-11) est destinée à supporter les crayons de combustible, dont elle est solidarisée par frottement et à maintenir l'extrémité inférieure de ces crayons dans une position invariable par rapport aux tubes guides 16 et à l'embout inférieur 14.

La grille de structure supérieure 22 est également solidarisée des crayons par frottement, sur leur partie terminale haute, mais elle peut se déplacer longitudinalement par rapport aux tubes guides 16 sur lesquels elle coulisse.

Les grilles de structure intermédiaires 24, au nombre de six par exemple, peuvent avoir l'une quelconque de plusieurs constitutions. Elles peuvent avoir une constitution classique et être prévues pour centrer de façon précise les crayons aux noeuds d'un réseau régulier, ce qui implique qu'elles présentent des moyens dans lesquels les crayons peuvent coulisser à frottements doux ; elles peuvent aussi être prévues pour simplement limiter le débattement en flexion des crayons.

On décrira plus loin, à titre d'exemples diverses constitutions possibles des grilles 20, 22 et 24.

L'assemblage suivant l'invention de la figure 1 comprend encore des grilles additionnelles 26 destinées à mélanger les filets de réfrigérant et à homogénéiser la température, n'ayant donc qu'un rôle thermohydraulique. Ces grilles sont généralement placées uniquement dans les parties les plus chaudes de l'assemblage, c'est-à-dire entre les grilles de structure placées à l'aval. L'assemblage représenté en figure 1 comporte trois grilles de mélange 26, dépourvues de ceinture et n'ayant qu'une fonction thermohydraulique, placées chacune dans l'intervalle entre deux grilles 24.

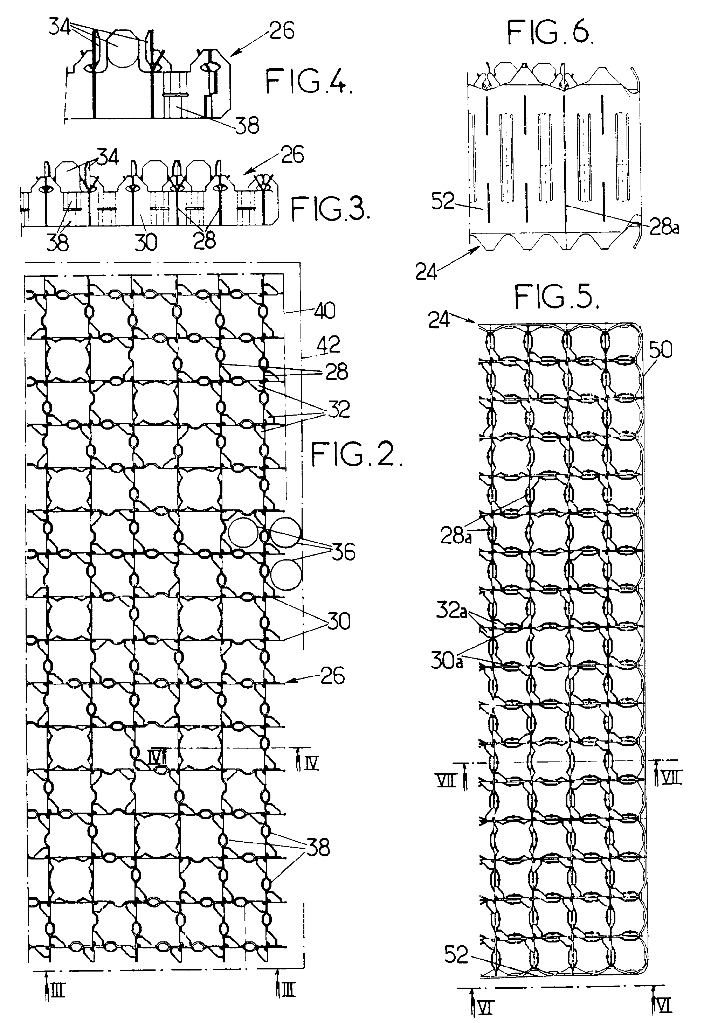

Les trois grilles de mélange sont identiques et peuvent avoir la constitution montrée en figures 2 à 4. Elles sont constituées de deux jeux de plaquettes entrcroisées 28 et 30, en alliage à base de zirconium, tel que le "zircaloy 4" détendu thermiquement ou un alliage à base de Zr présentant à l'état trempé un meilleur comportement en corrosion et de grandissement sous irradiation (par exemple Nb1 Snl Fe 0,5). Les plaquettes sont découpées dans du feuillard mince, d'environ 0,5 mm d'épaisseur par exemple, assemblées à mi-fer et solidarisées les unes des autres par soudage. Leur tranche aval est prolongée par des ailettes de mélange 32 qui peuvent avoir l'une quelconque des dispositions classiquement utilisées. Elles sont prolongées, autour des cellules destinées au passage des tubes guides 16, par des languettes 34 destinées à être soudées, par exemple par résistance, à ces tubes guides.

Pour empêcher les crayons de combustible 36, dont seuls quelques uns sont représentés sur la figure 2, de venir en contact avec les ailettes de mélange 32, des bossettes de butée 38 sont ménagées sur les plaquettes 28 et 30 et font saillie dans chacune des cellules occupées par un crayon combustible 36. Leur avancée par rapport à la partie courante des plaquettes est telle qu'elles laissent subsister un jeu diamétral permettant aux crayons combustibles 36 de coulisser librement. Les bossettes 38 peuvent être alignées suivant une ligne décalée par rapport au milieu des faces des cellules de façon à ne pas interférer avec les racines des ailettes de mélange 32. Elles peuvent être constituées alors sur toute la largeur de la plaquette : deux bossettes adjacentes sont formées en pratiquant une fente le long de la ligne médiane de la plaquette et en déformant en sens opposés la plaquette au-dessus et au-dessous de la fente.

La grille 26 montrée en figures 2 à 4 est constituée de plaquettes de longueur telle que l'encombrement en plan de la grille, indiqué par le cadre 40 en traits mixtes, est inscrit à l'intérieur du carré 42 constituant l'enveloppe virtuelle des crayons 36. Ainsi les grilles additionnelles de deux assemblages adjacents ne peuvent entrer en contact les unes avec les autres. Il n'est pas nécessaire de leur donner la robustesse qui serait requise en cas de risque de choc.

Dans la pratique, il suffit que les plaquettes se terminent au niveau du milieu des crayons combustibles de rive 36.

Les grilles de structure 24 n'assurant pas le supportage des crayons peuvent avoir la constitution montrée schématiquement en figures 5 à 8. Toutes les grilles 24 représentées sur la figure 1 sont munies d'ailettes mais dans certains cas les ailettes peuvent être omises sur les grilles placées les plus en amont.

Les grilles 24 sont constituées de deux jeux de plaquettes 28a et 30a qui seront généralement du même matériau que les plaquettes 28 et 30.

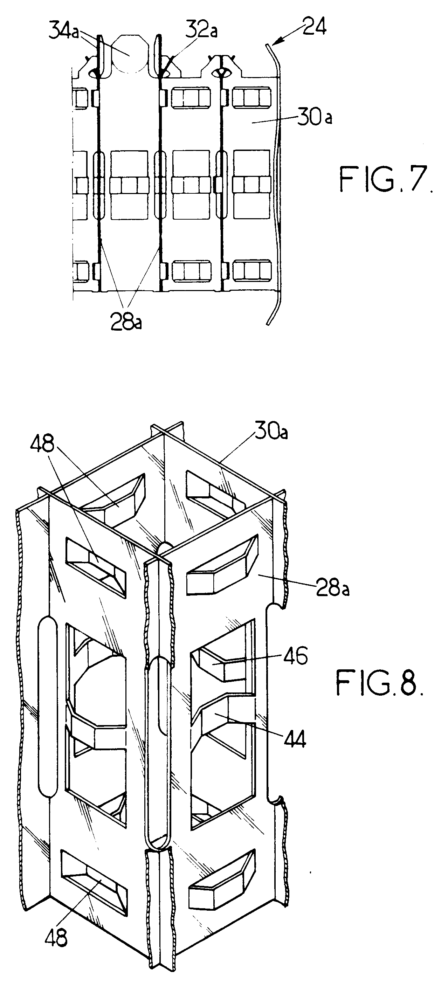

Les grilles 24 représentées comportent des ailettes de mélange 32 pouvant, elles aussi, avoir la même disposition que sur les grilles additionnelles 26 et des bossettes. Dans le mode de réalisation illustré sur les figures 7 et 8, ces bossettes sont au nombre de six pour chaque cellule destinée à recevoir un crayon de combustible 36. Deux des bossettes 44 et 46 sont élastiques et destinées à venir en appui sur le crayon. Les autres bossettes 48 constituent de simples appuis, à l'opposé des bossettes élastiques.

Les grilles de structure comportent une ceinture formée de plaquettes externes 50 et 52 dont les coins sont avantageusement capotés pour éviter l'accrochage entre ceinture appartenant à des assemblages adjacents. Les plaquettes constituant la ceinture peuvent être soudées par des cordons aux plaquettes internes 28a et 30a. Les plaquettes internes peuvent, elles, être soudées par faisceaux laser ou bombardement électronique à chaque croisement, dans les zones proches des grandes faces de la grille.

La figure 7 montre des languettes 34a permettant de souder les grilles 24 sur les tubes guides.

Dans une variante de réalisation, les bossages équipant les grilles 24 n'ont pour but que de limiter la flexion des crayons et d'éviter qu'ils ne viennent en contact avec les ailettes en cas de vibration des crayons. Ces bossages peuvent par exemple avoir l'une des constitutions décrites dans la demande de brevet français N° 90 09446.

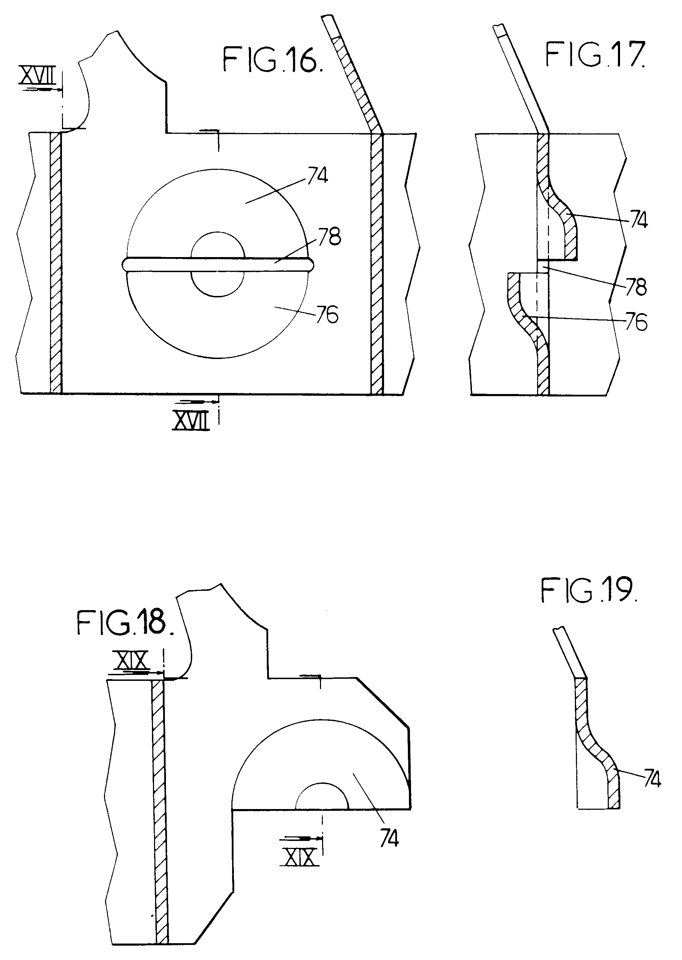

Les figures 16 et 17 montrent, à titre d'exemple, des moyens de butée ménagés dans une portion de plaquette constituant la paroi séparant deux cellules, constitués par deux portions 74 et 76 en forme de demi-boutons, à base approximativement semi-circulaire, alignées l'une par rapport à l'autre dans le sens de circulation du réfrigérant et ayant des saillies de sens opposé. Ces bossettes forment deux écopes de mêmes dimensions. Elles sont orientées tête bêche et s'ouvrent l'une vers l'autre. Elles sont séparées par une fente 78.

La fente 78, au lieu d'être orthogonale à la direction générale d'écoulement, pourrait être oblique, ce qui donne aux écopes une disposition relative également oblique.

On peut également constituer des grilles à écopes n'ayant qu'une fonction thermohydraulique de brassage, dépourvues de ceinture. Dans ce cas, les cellules de rive peuvent être munies de moyens de butée en forme de fractions seulement d'écope.

Les figures 18 et 19 montrent une constitution possible de moyens de butée utilisables sur une telle grille. La partie terminale de la plaquette située au-dessous de l'écope supérieure 74 est supprimée.

A titre d'exemple, on peut indiquer que les écopes peuvent présenter une saillie de 1,1 à 1,2 mm et un diamètre à la base d'environ 7 mm.

La grille de supportage 20, qui constitue la grille de structure inférieure, à une fonction de serrage des crayons et de maintien de l'extrémité basse de ces crayons par rapport aux tubes guides 16 et à l'embout inférieur 14.

Jusqu'ici, la grille inférieure des assemblages combustibles était souvent en plaquettes d'alliage de zirconium, sans ailettes de brassage et munie de ressorts rapportés en un matériau conservant ses propriétés mécaniques sous irradiation, tel que l'inconel.

Dans un mode avantageux de réalisation de l'invention, la grille 20 est constituée de plaquettes découpées et embouties en acier martensitique assemblées par brasage, puis soumises à un traitement thermique donnant à des ressorts intégrés aux plaquettes l'élasticité nécessaire.

A titre d'exemple, on peut donner les caractéristiques ci-après.

Les plaquettes sont découpées dans du feuillard d'acier austénitique à environ 80% de fer en poids, ayant 13 à 14% de Cr, 4 à 8% de Ni et 2 à 3% de Cu ou Mo, ainsi que 0,1 à 0,5% d'Al, la teneur des autres éléments éventuels étant inférieure à 0,1%.

Avant emboutissage des plaquettes, la ductilité de l'acier est augmentée par une trempe, suivie d'un revenu vers 760°C, puis vers 620°C pour réduire la relaxation sous irradiation.

Les plaquettes découpées et embouties pour former les ressorts et les bossettes sont assemblées puis brasées de façon classique vers 930°C. Pour corriger les effets thermiques du brasage, la grille est soumise à trempe et revenu, par exemple par chauffage vers 930°C et refroidissement à l'air, puis maintenu pendant au moins 4 heures ente 570°C et 600°C.

On obtient ainsi une microstructure finale donnant à l'acier une bonne résistance à la relaxation sous irradiation, et, des caractéristiques favorables de résistance à la corrosion sous contrainte et à la fragilisation par l'hydrogène.

Les plaquettes sont découpées de façon que chaque cellule contenant un crayon de combustible soit munie de deux ressorts 54 orientés à 90° l'un de l'autre et de quatre bossettes 56 deux à deux opposées aux ressorts 54.

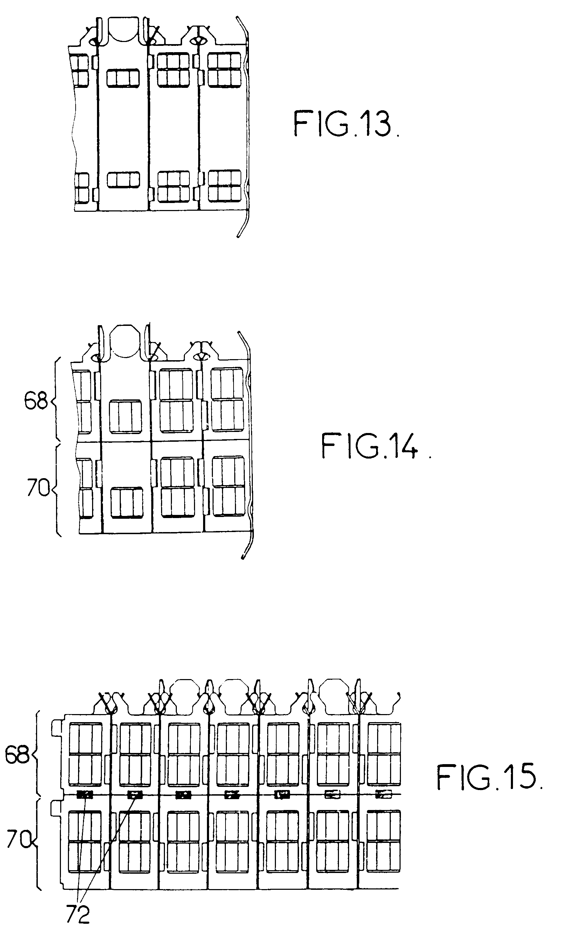

Lorsque la grille 20 est constituée en acier martensitique, elle ne peut être raccordée directement aux tubes guides 16 par soudage ou brasage. La solidarisation de la partie basse des tubes guides avec l'embout inférieur 14 et avec la grille de supportage 20 peut avoir la constitution montrée en figure 12. Dans la partie terminale inférieure de chacun des vingt quatre tubes guides 16 est insérée une cartouche tubulaire 58 destinée à l'amortissement hydraulique de la chute des crayons des grappes de commande. La cartouche 58 et le tube 16 sont fixés par repoussage ou roulage dans des gorges du bouchon 60 de tubes guides et ce bouchon est lui-même solidarisé de l'embout 14 par une vis 62 percée d'un trou de passage de réfrigérant et immobilisable en rotation par déformation de sa collerette terminale 64. La grille inférieure 20 est munie de manchons 65 brasés sur elle, en acier. Les extrémités inférieures de ces manchons 64 sont soudés par résistance en 66 sur les bouchons 62.

La grille supérieure 22 peut elle aussi être constituée de plaquettes en acier martensitique ayant des ressorts et des bossettes du genre de ceux montrés en figures 10 et 11. Des manchons peuvent être brasés sur la grille et emprisonnés entre deux jeux de butée soudés sur les tubes guides, au-dessus et au-dessous de la grille 22 pour limiter le débattement de cette grille sur les tubes guides.

A titre d'exemple, on peut indiquer qu'un assemblage destiné à un réacteur à eau sous pression du genre montré en figure 1 peut comporter trois grilles additionnelles dont les plaquettes sont découpées dans du feuillard de 0,5 mm d'épaisseur environ en général et ont une hauteur de 10 mm alors que les grilles de structure 24 sont fabriquées par emboutissage de feuillard de 0,5 mm d'épaisseur pour les plaquettes internes et de feuillard plus épais pour les plaquettes constituant la ceinture, avec une hauteur dépassant 40 mm. La grille de supportage en acier matensitique peut avoir 30 à 35 mm de hauteur.

La variante de réalisation de grille de structure montrée en figure 13 se différencie de celle des figures 5 à 8 en ce que chaque cellule destinée à recevoir un crayon est munie de huit bossettes d'appui, réalisées par découpe et enfoncement des plaquettes, limitant les débattements transversaux des crayons pour éviter qu'ils ne viennent marteler les ailettes et que l'amplitude de vibration soit telle qu'il puissent s'endommager . Dans le cas illustré sur la figure 13, les bossettes sont disposées par couple de deux, les bossettes d'un même couple étant orientées dans des directions opposées.

Dans la variante de réalisation montrée en figures 14 et 15, la ceinture 24 est constituée de deux moitiés 68 et 70 identiques, si ce n'est que seule la moitié supérieure est munie d'ailettes et de languettes de fixation sur les tubes guides. Chacune des cellules destinées à recevoir un crayon de combustible comporte huit bossettes, comme dans le cas de la figure 13. Chacune des moitiés est démunie de ceinture. Ces deux moitiés sont tout d'abord fixées l'une à l'autre par soudage des deux moitiés à leur périphérie, c'est-à-dire en soixante huit emplacements. Les languettes terminales des plaquettes internes sont ensuite engagées dans les plaquettes, de hauteur double de celle des plaquettes des moitiés, destinées à constituer la ceinture. Enfin, le soudage des plaquettes extérieures est effectué de façon classique.

## Revendications

1. Assemblage combustible comprenant une structure de support ayant :
- deux embouts (12,14) reliés par des tubes guides (16) ;
- des grilles de structure (28a,30a) réparties le long de l'assemblage, chaque grille de structure ayant au moins deux jeux de plaquettes entrecroisées et une ceinture extérieure délimitant des cellules traversées les unes par les tubes guides et les autres par des crayons, les plaquettes étant munies de moyens limitant le débattement des crayons à partir des noeuds d'un réseau régulier et étant fixées à certains au moins des tubes guides, certaines grilles de structure au moins étant munies d'ailettes de mélange des filets de réfrigérant ; et
- des grilles additionnelles placées chacune entre deux grilles de structure, chaque grille additionnelle ayant deux jeux de plaquettes (28,30) entrecroisées et fixées les unes aux autres à leurs croisements, munies d'ailettes (32) de brassage du réfrigérant, délimitant des cellules destinées à être traversées les unes par des tubes guides et les autres par des crayons de combustible, chaque plaquette étant munie, sur chacune des faces de celles des cellules internes qui reçoivent des crayons, de bossettes (38) dont la saillie est suffisamment faible pour laisser un jeu radial aux crayons traversant la cellule et est proportionnée à la saillie des ailettes de façon que le crayon vienne en contact avec les bossettes sans atteindre les ailettes en cas de vibrations en flexion,
caractérisé en ce que les crayons sont supportés uniquement par une des deux grilles de structure terminale (20), fixée à certains au moins des tubes guides et munie de moyens élastiques de supportage et de centrage des crayons,
et en ce que lesdites grilles additionnelles (26) sont placées uniquement dans une partie aval de l'assemblage, sont démunies de ceinture et sont constituées de plaquettes de longueur telle que l'encombrement en plan de la grille additionnelle soit inférieur à celui du polygone constituant l'enveloppe virtuelle des crayons.

2. Assemblage selon la revendication 1, caractérisé en ce que les grilles additionnelles sont constituées en un alliage à base de zirconium à faible absorption neutronique, tel qu'un "zircaloy" détendu thermiquement ou un alliage trempé à base de zirconium.

3. Assemblage selon la revendication 1 ou 2, caractérisé en ce que les crayons sont supportés par une seule (20) des deux grilles de structure terminales, fixée à certains au moins des tubes guides et munie de moyens élastiques de supportage et de centrage des crayons.

4. Assemblage selon la revendication 3, caractérisé en ce que l'autre grille terminale (22) n'est pas fixée aux tubes guides.

5. Assemblage selon la revendication 3 ou 4, caractérisé en ce que les grilles de structure (24) autres que les grilles terminales (20, 22) sont fixées à certains au moins des tubes guides et portent soit des moyens de centrage des crayons, soit des moyens qui limitent le débattement en flexion des crayons.

6. Assemblage selon la revendication 3, 4 ou 5, caractérisé en ce que celle au moins des grilles de structure terminales qui supporte les crayons est en acier martensitique.

7. Assemblage selon la revendication 6, caractérisé en ce que ladite grille (20) qui supporte les crayons est munie de manchons (65) en acier brasés sur elle et dont les extrémités inférieures sont soudées sur des bouchons (62) de tube guide.

8. Assemblage selon la revendication 6 ou 7, caractérisé en ce que ladite grille qui supporte les crayons est en acier martensitique contenant 13 à 14% en poids de nickel, soumis à une trempe vers 930°C et à un revenu entre 570 et 600°C.

9. Assemblage selon l'une quelconque des revendications 3 à 8, caractérisé en ce qu'une autre grille termnale (22) est en acier martensitique, est munie de moyens élastiques de centrage des crayons et est libre de se déplacer le long des tubes guides dans un domaine prédéterminé.

10. Assemblage selon la revendication 9, caractérisé en ce que ladite autre grille est munie de manchons brasés emprisonnés entre des butées soudées sur les tubes guides.

11. Assemblage selon l'une quelconque des revendications 1 à 10, caractérisé en ce que les bossettes sont constituées, dans chaque paroi séparant deux cellules internes occupées par des crayons de combustible, de portions de plaquette découpées et déformées en forme d'écope (74, 76) décalées l'une par rapport à l'autre dans le sens de circulation du réfrigérant, dont les saillies sont de sens opposés, tendant à faire passer du réfrigérant d'une des cellules à l'autre.

## Patentansprüche

1. Brennelementkassette mit einem Trägeraufbau mit:
- zwei Endstücken (12, 14), die durch Führungsrohre (16) miteinander verbunden sind;
- Strukturgittern (28a, 30a), die entlang der Kassette verteilt angeordnet sind, wobei jedes Strukturgitter mindestens zwei Sätze sich kreuzender Stege und einen äußeren Gurt aufweist, die die Zellen eingrenzen, von denen die einen von Führungsrohren durchquert werden und die anderen von Brennstäben, wobei die Stege mit Mitteln versehen sind, die die Querbewegung der Stäbe ausgehend von Knoten eines gleichmäßigen Netzes eingrenzen und wobei die Gitter mindestens an bestimmten Führungsrohren befestigt sind, wobei mindestens bestimmte Strukturgitter mit Mischfahnen des Kühlmittelstroms versehen sind; und
- zusätzlichen Gittern, die jeweils zwischen zwei Strukturgittern angeordnet sind, wobei jedes Zusatzgitter zwei Sätze gekreuzte Stege (28, 30) aufweist, die an ihren Kreuzungspunkten aneinander befestigt sind und mit Verwirbelungsfahnen (32) für das Kühlmittel versehen sind und die Zellen eingrenzen, von denen einige dazu bestimmt sind von Führungsrohren durchquert zu werden und andere von Brennstäben, wobei jeder Steg auf jeder der Zelleninnenseiten von den Zellen, die Brennstäbe aufnehmen, mit Ausbuchtungen (38) versehen ist, dessen Vorspringen hinreichend gering ist, so daß ein radiales Spiel für die Brennstäbe freigelassen wird, welches zu dem Vorspringen der Fahnen proportional ist derart, daß der Brennstab mit den Vorsprüngen in Kontakt gerät ohne die Fahnen bei einer Verbiegevibration zu berühren,
**dadurch gekennzeichnet, daß**
die Brennstäbe lediglich von einem der beiden Endstrukturgitter (20) gehalten werden, die wenigstens an bestimmten Führungsrohren befestigt sind und mit elastischen Halterungs- und Zentriermitteln für die Stäbe versehen sind,
und dadurch, daß die Zusatzgitter (26) ausschließlich in einem stromab gelegenen Bereich der Kassette angeordnet sind, keine Gurte aufweisen und aus Stegen einer solchen Länge bestehen, derart, daß die räumlichen Abmessungen des Zusatzgitters kleiner sind als die des Vielecks, welches die virtuelle Hülle der Stäbe beschreibt.

2. Brennelementkassette nach Anspruch 1,
dadurch gekennzeichnet, daß
die Strukturgitter aus einer Legierung auf Zirconiumbasis mit geringer Neutronenabsorption, wie thermisch entspanntem Zircalloy oder einer abgeschreckten Legierung auf Zirconiumbasis bestehen.

3. Brennelementkassette nach Anspruch 1 oder 2,
dadurch gekennzeichnet, daß
die Brennstäbe nur von einem (20) der beiden Endstrukturgitter gehalten werden, die an mindestens bestimmten Führungsrohren befestigt sind und die mit elastischen Halte- und Zentriermitteln für die Brennstäbe versehen sind.

4. Brennelementkassette nach Anspruch 3,
dadurch gekennzeichnet, daß
das andere Endgitter (22) nicht an den Führungsrohren befestigt ist.

5. Brennelementkassette nach Anspruch 3 oder 4,
dadurch gekennzeichnet, daß
die anderen Strukturgitter (24), die keine Endgitter (20, 22) sind, an mindestens bestimmten Führungsrohren befestigt sind und entweder Zentriermittel für die Brennstäbe aufweisen oder Mittel, die ein Biegevibrieren der Stäbe eingrenzen.

6. Brennelementkassette nach Anspruch 3, 4 oder 5,
dadurch gekennzeichnet, daß
wenigstens das Strukturendgitter, welches die Brennstäbe haltert, aus martensitischem Stahl besteht.

7. Brennelementkassette nach Anspruch 6,
dadurch gekennzeichnet, daß
das Gitter (20), welches die Brennstäbe trägt, mit Stahlmuffen versehen ist, die mit dem Gitter verlötet sind und deren unteren Enden auf den Deckeln (62) der Führungsrohre verschweißt sind.

8. Brennelementkassette nach Anspruch 6 oder 7,
dadurch gekennzeichnet, daß
das Gitter, welches die Brennstäbe haltert aus martensitischem Stahl besteht, der 13 bis 14 Gew.-% Nickel aufweist, einer Härtung bei 930 °C und einem Anlassen zwischen 570 und 600 °C ausgesetzt ist.

9. Brennelementkassette nach einem der Ansprüche 3 bis 8,
dadurch gekennzeichnet, daß
ein weiteres Endgitter (22) aus martensitischem Stahl besteht, und mit elastischen Zentrierorganen für die Brennstäbe versehen ist und in einem vorbestimmten Bereich frei beweglich entlang der Führungsrohre ist.

10. Brennelementkassette nach Anspruch 9,
dadurch gekennzeichnet, daß
dieses andere Gitter mit verlöteten Buchsen versehen ist, welche zwischen auf den Führungsrohren angeschweißten Anschlägen eingeschlossen sind.

11. Brennelementkassette nach einem der vorstehenden Ansprüche 1 bis 10,
dadurch gekennzeichnet, daß
die Vorsprünge in jeder Wand, die zwei Innenzellen begrenzen, die mit Brennstäben besetzt sind, aus Stegteilen bestehen, die in Form von Löffeln (74, 76) ausgeschnitten und geformt sind, die zueinander versetzt in Fließrichtung des Kühlmittels angeordnet sind und die in entgegengesetzter Richtung vorspringen und das Kühlmittel von einer Zelle in eine andere leiten.

## Claims

1. A fuel assembly comprising a support structure having:
two end fittings (12,14) interconnected by guide tubes (16);
structural grids (28a,30a) distributed along the assembly, each structural grid having at least two mutually crossed sets of plates and an outer belt defining cells, some of which receive the guide tubes and the others of which receive rods, the plates being provided with means for limiting the amount of movement available to the rods relative to nodes of a regular array and being fixed to at least some of the guide tubes, at least some of the structural grids being provided with fins for mixing streams of coolant; and
additional grids each placed between two structural grids, each additional grid having two crossed sets of plates (28,30) that are fixed to each other at their crossing points, provided with coolant stirring fins (32), defining cells, some for receiving guide tubes and the others for receiving fuel rods, each plate being provided, on each of the faces of those of the inner cells which receive rods, with bosses (38) which project by an amount which is sufficiently small to leave a radial clearance to the rod received in the cell and is proportioned relative to the projection of the fins for the rod to contact the bosses without reaching the fins in case of bending vibrations,
characterized in that the rods are only supported by one of the two terminal structural grids (20), fixed to at least some of the guide tubes and provided with resilient means for supporting and centering the rods, and
in that said additional grids (26) are only located in a downstream portion of the assembly, are devoid of belt and are constituted of plates having such a length that the footprint of the additional grid be less than that of a polygon constituting a virtual envelope of the rods.

2. Assembly according to claim 1, characterized in that the additional grids are made of a zirconium based alloy having a low neutron absorption, such as a thermally tempered "zircaloy" or a quenched zirconium based alloy.

3. Assembly according to claim 1 or 2, characterized in that the rods are supported by only one (20) of the two terminal structural grids, which is fixed to at least some of the guide tubes and which is provided with resilient means for supporting and centering the rods.

4. Assembly according to claim 3, characterized in that the other terminal grid is unconnected to the guide tubes.

5. Assembly according to claim 3 or 4, characterized in that the structural grids (24) other than the terminal grids (20,22) are fixed to at least some of the guide tubes and carry either rod-centering means or means for limiting the amount of bending movement available to the rods.

6. Assembly according to claim 3, 4 or 5, characterized in that at least that one of the terminal structural grids which supports the rods is of martensitic steel.

7. Assembly according to claim 6, characterized in that said structural grid (20) which supports the rods is provided with steel sleeves (65) brazed thereto and whose bottom ends are welded on guide tube plugs (62).

8. Assembly according to claim 6 or 7, characterized in that said grid which supports the rods is made of martensitic steel containing 13% to 14% by weight of nickel, and subjected to quenching at about 930°C and to annealing in the range 570°C to 600°C.

9. Assembly according to any one of claims 3-8, characterized in that another terminal grid (22) is made of martensitic steel, is provided with resilient rod-centering means, and is free to move along the guide tubes within a predetermined range.

10. Assembly according to claim 9, characterized in that said other grid is provided with brazed sleeves held captive between abutments welded to the guide tubes.

11. Assembly according to any one of claims 1-10, characterized in that the bosses comprise, in each plate separating two inner cells which receive rods of portions of said plate that are cut out and deformed into scoops (74,76) which are mutually offset in the coolant flow direction, projecting in mutually opposite directions and causing coolant to pass from one cell to another.
